# EUROPÄISCHE PATENTSCHRIFT

(11) **EP 3 595 802 B1**
(45) Veröffentlichungstag und Bekanntmachung des Hinweises auf die Patenterteilung: **04.05.2022**
(21) Anmeldenummer: 18710015.1
(22) Anmeldetag: 07.03.2018
(51) Int. Cl.: B01D 71/02, B01D 53/22

(54) **VERFAHREN ZUR HERSTELLUNG EINES MEMBRANTRÄGERBAUTEILS UND EIN MEMBRANTRÄGERBAUTEIL ZUR ABSCHEIDUNG VON WASSERSTOFF**
METHOD FOR PRODUCING A MEMBRANE CARRIER COMPONENT, AND A MEMBRANE CARRIER COMPONENT FOR THE SEPARATION OF HYDROGEN
PROCÉDÉ PERMETTANT DE FABRIQUER UN ÉLÉMENT DE SUPPORT DE MEMBRANE ET ÉLÉMENT DE SUPPORT DE MEMBRANE SERVANT À SÉPARER DE L'HYDROGÈNE

(30) Priorität: 16.03.2017 DE 102017105607
(43) Veröffentlichungstag der Anmeldung: 22.01.2020
(73) Patentinhaber: GKN Sinter Metals Engineering GmbH, 42477 Radevormwald (DE)
(72) Erfinder: BALZER, Harald, 58099 Hagen (DE); MÄHLIG, Enrico, 50767 Köln (DE); DE CRISTOFARO, Nicola, 42859 Remscheid (DE)
(74) Vertreter: karo IP
(86) Internationale Anmeldenummer: PCT/EP2018/055565
(87) Internationale Veröffentlichungsnummer: WO 2018/166859

(56) Entgegenhaltungen:
- WO-A1-2010/115562
- AT-U1- 12 132
- DE-A1- 10 359 813

## Beschreibung

Die vorliegende Erfindung betrifft ein Verfahren zur Herstellung eines Membranträgerbauteils und ein Membranträgerbauteil zur permeativen Abtrennung von Wasserstoff aus Wasserstoff enthaltenen Gasgemischen. Das Membranträgerbauteil umfasst einen Membranträger aus einem porösen Sintermetall, das über ein metallisches Verbindungselement an einen Reaktor anbindbar ist.

Aus der WO 2010/115562 A1 ist ein solches, dort als Membranrohr bezeichnetes Membranträgerbauteil bekannt. Das Membranrohr umfasst ein poröses Rohr aus einem Sintermetall mit einer Palladium enthaltenden oder aus Palladium bestehenden Membran, wobei das Sintermetallrohr an einem Ende ein Fitting, bestehend aus einem gasdichten Material, aufweist. Das Fitting dient der Anbindung an einen Reaktor. Fitting und Sintermetallrohr sind durch Sintern, Löten oder Reibschweißen miteinander verbunden. Damit soll eine schweißtechnische Verbindung (z. B. über WIG-Schweißen) von Sintermetallrohr und Reaktor ersetzt werden, von der bekannt ist, dass nach kurzen Betriebszeiten Risse entstehen können.

Aus der DE 10359813 A1 ist eine verbesserte Verbindung zwischen einem Membranrohr und einem Anschlussstück bekannt. Dabei wird zuerst die Stirnseite des Membranrohrs mittels eines Laserschweißgerätes aufgeschmolzen und so abgedichtet. Anschließend wird das so abgedichtete Membranrohr an das Anschlussstück geschweißt.

Hiervon ausgehend ist es Aufgabe der vorliegenden Erfindung, die im Zusammenhang mit dem Stand der Technik geschilderten Probleme wenigstens teilweise zu lösen. Es soll insbesondere eine schweißtechnische Verbindung eines Verbindungselements mit einem Membranträger vorgeschlagen werden, bei der durch die möglicherweise auftretenden Risse in der Schweißverbindung eine Beeinträchtigung der Funktion des Membranträgers verhindert werden soll.

Hierzu trägt ein Verfahren zur Herstellung eines Membranträgerbauteils gemäß den Merkmalen des Patentanspruchs 1 und ein Membranträgerbauteil gemäß den Merkmalen des Patentanspruchs 11 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Herstellung eines Membranträgerbauteils mit einem Membranträger aus einem Sintermetall vorgeschlagen, wobei der Membranträger eine (gasdichte) Membranschicht aufweist. Das Verfahren umfasst zumindest die folgenden Schritte:
a. Bereitstellen eines flächigen oder rohrförmigen Membranträgers aus einem porösen Sintermetall mit einer Oberfläche, die zur Beschichtung mit der Membranschicht vorgesehen ist;
b. Bereitstellen eines metallischen Verbindungselements zur Anbindung des Membranträgers an eine gasführende Leitung;
c. Verbinden von Membranträger und Verbindungselement mit einer Schweißnaht zu dem Membranträgerbauteil und Bilden einer ersten Verbindungszone zwischen Schweißnaht und Membranträger sowie einer zweiten Verbindungszone zwischen Schweißnaht und Verbindungselement;
d. Anordnen einer Metallschicht auf der Oberfläche und der Schweißnaht, so dass die Metallschicht zumindest die erste Verbindungszone überdeckt;
e. stoffschlüssiges Verbinden der Metallschicht zumindest mit der Oberfläche und der Schweißnaht;
f. Beschichten zumindest von Teilbereichen der Oberfläche und zumindest von Teilbereichen der Folie mit der Membranschicht.

Der Membranträger und damit insbesondere auch das Verbindungselement sind bevorzugt rohrförmig ausgeführt, so dass innerhalb des Membranträgerbauteils ein Gasgemisch zurückgehalten und über den Membranträger und die gasdichte Membranschicht Wasserstoff an eine Umgebung außerhalb des Membranträgerbauteils abgeschieden werden kann. Der rohrförmige Membranträger wird insbesondere durch eine umlaufend ausgeführte Schweißnaht mit dem rohrförmigen Verbindungselement verbunden.

Die Membranschicht besteht insbesondere (ausschließlich) aus Palladium oder aus einer palladiumhaltigen Legierung. Bevorzugt wird die Membranschicht über stromloses Metallabscheiden oder mit Sputtertechniken in bekannter Art und Weise auf dem Membranträger abgeschieden.

Die Arbeitstemperaturen des Membranträgerbauteils und der Membranschicht liegen insbesondere bei über 350 Grad Celsius, bevorzugt bei über 400 Grad Celsius.

Üblicherweise erfolgt vor dem Aufbringen der Membranschicht auf den Membranträger das schweißtechnische Verbinden von Verbindungselement und Membranträger. Bei dieser Fügeoperation wurde jedoch beobachtet, dass Spalte entstehen können, die ein Beschichten dieses Bereichs mit der Membranschicht erschweren. Weiter ist gerade bei Verwendung eines Membranträgers aus Sintermetall die Schweißnaht zwischen dem Verbindungselement und dem Membranträger häufig rau und zum Teil porös oder im Bereich der Wärmeeinflusszone der Schweißnaht mit Rissen behaftet. Auch diese Umstände erschweren das Aufbringen einer Membranschicht, die die ihr zugewiesene Funktion einer gasdichten Membranschicht erfüllen soll.

Daher wird nun vorgeschlagen, dass eine Metallschicht zumindest auf der Oberfläche des Membranträgers und auf der Schweißnaht angeordnet wird, so dass die Metallschicht zumindest die erste Verbindungszone überdeckt.

Insbesondere enthält die Metallschicht höchstens 50 % des Anteils an Palladium, den die in Schritt f. aufgetragene Membranschicht aufweist.

Durch die Metallschicht können insbesondere Unebenheiten oder Risse in der ersten Verbindungszone und/oder der zweiten Verbindungszone und/oder der Schweißnaht ausgeglichen bzw. abgedeckt werden. Damit kann eine vollständig gasdichte Verbindung (auch gegenüber Wasserstoff gasdicht) von Verbindungselement und Membranträger verwirklicht werden, so dass eine Verunreinigung des über den Membranträger abgeschiedenen Wasserstoffs vermieden werden kann.

Insbesondere wird der Membranträger vor Schritt d., bevorzugt dabei nach Schritt c., zumindest teilweise mit einer Diffusionssperrschicht beschichtet, die zumindest teilweise oder vollständig die Oberfläche des Membranträgers bildet. Bevorzugt wird zumindest der Bereich der Oberfläche mit der Diffusionssperrschicht beschichtet, der in Schritt f. zur Beschichtung mit der Membranschicht vorgesehen ist.

Die Diffusionssperrschicht soll insbesondere eine Degradation der Membranschicht infolge von Diffusionswechselwirkungen mit dem Membranträger verhindern oder zumindest einschränken. Hierbei handelt es sich insbesondere um eine aus mit Yttrium teilstabilisiertem Zirkonoxid oder reinem Zirkonoxid oder Tianoxid oder Aluminiumoxid bestehende (keramische) Diffusionssperrschicht.

Insbesondere erstreckt sich die Diffusionssperrschicht ausgehend von dem Membranträger zumindest bis in den Bereich der ersten Verbindungszone.

Dabei kann die Diffusionssperrschicht in Poren oder Risse im Bereich der Schweißnaht eindringen und dabei eine lokal erhöhte Dicke aufweisen. Gerade bei der nachfolgenden thermischen Belastung des Membranträgerbauteils im Betrieb oder auch im Rahmen einer thermischen Behandlung im Zuge der Herstellung des Membranträgerbauteils können so aufgrund der unterschiedlichen thermischen Ausdehnungskoeffizienten von Diffusionssperrschicht und Schweißnaht Risse auftreten, die die Funktionalität des Membranträgerbauteils beeinträchtigen können.

Insbesondere wird die Metallschicht so aufgetragen, dass sie sich ausgehend von der Schweißnaht über die Verbindungszone hinweg in den Bereich des Membranträgers erstreckt und dabei zumindest teilweise die Diffusionssperrschicht abdeckt.

Die Diffusionssperrschicht wird insbesondere auch zwischen der Metallschicht und dem Membranträger angeordnet, so dass die Metallschicht auf der, die Diffusionssperrschicht aufweisende Oberfläche des Membranträgers aufliegt.

Insbesondere wird in Schritt d. eine Metallschicht angeordnet, die zumindest einen der Werkstoffe Silber [Ag], Kupfer [Cu], Yttrium [Y], Cer [Ce], Gold [Au], Ruthenium [Ru], Indium [In] und Palladium [Pd] umfasst.

Bevorzugt besteht die Metallschicht zu wenigstens 95 Massen-% aus Silber [Ag] oder aus Kupfer [Cu].

Insbesondere wird in Schritt d. eine Metallschicht angeordnet, die eine Dicke von höchstens 50 µm [Mikrometer], bevorzugt von höchstens 20 µm, besonders bevorzugt von höchstens 10 µm hat. Bevorzugt weist die Metallschicht eine Dicke von mindestens 5 µm auf.

Insbesondere wird die Metallschicht in bekannter Art und Weise über stromloses Metallabscheiden oder mit Sputtertechniken in bekannter Art und Weise auf der Oberfläche und der Schweißnaht abgeschieden.

Insbesondere ist die Metallschicht eine metallische Folie, die in Schritt d. auf der Oberfläche und der Schweißnaht angeordnet wird. Bevorzugt weist die Metallschicht also vor dem Anordnen auf der Oberfläche und der Schweißnaht eine flächige Form auf und ist insbesondere einstückig ausgeführt.

Insbesondere wird in Schritt d. eine metallische Folie angeordnet, die einen weichgeglühten Zustand hat.

Der weichgeglühte Zustand ermöglicht insbesondere eine gute Verformbarkeit der Folie, so dass diese möglichst großflächig an dem Verbindungselement, der Schweißnaht und/oder der Oberfläche des Membranträgers zur Anlage gebracht werden kann.

Gemäß einer vorteilhaften Ausgestaltung wird die metallische Folie in Schritt d. mittels mindestens einer elastisch verformbaren Walze zumindest an die Schweißnaht und die Oberfläche (ggf. auch an das Verbindungselement) angedrückt.

Bevorzugt ist auch, dass die metallische Folie mittels Rollnahtschweißen zumindest mit der Oberfläche (ggf. auch mit der Schweißnaht und/oder insbesondere mit dem Verbindungselement) stoffschlüssig verbunden wird.

Gemäß einer weiteren vorteilhaften Ausgestaltung wird die Metallschicht in Schritt e. mittels Sintern stoffschlüssig zumindest mit der Oberfläche und der Schweißnaht (ggf. auch mit dem Verbindungselement) verbunden. Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Es wird weiter ein Membranträgerbauteil vorgeschlagen, insbesondere hergestellt durch das vorstehend beschriebene Verfahren. Das Membranträgerbauteil weist zumindest einen Membranträger aus einem porösen Sintermetall und ein metallisches Verbindungselement zur Anbindung des Membranträgers an eine gasführende Leitung auf. Der Membranträger und das Verbindungselement sind über eine Schweißnaht miteinander verbunden, wobei der Membranträger eine Oberfläche aufweist, die mit einer Membranschicht beschichtet ist. Die Schweißnaht (zumindest teilweise) und ein an die Schweißnaht angrenzender Bereich der Oberfläche sind von einer Metallschicht überdeckt, wobei die Membranschicht zumindest teilweise auf der Metallschicht angeordnet ist.

Die Metallschicht wird insbesondere durch die im Rahmen des vorgeschlagenen Verfahrens applizierte Folie oder durch stromloses Metallabscheiden oder mit Sputtertechniken in bekannter Art und Weise gebildet. Die Ausführungen zu dem Verfahren gelten gleichermaßen für das Membranträgerbauteil.

Insbesondere umfasst die Metallschicht zumindest einen der Werkstoffe Silber [Ag], Kupfer [Cu], Yttrium [Y], Cer [Ce], Gold [Au], Ruthenium [Ru], Indium [In] und Palladium [Pd].

Bevorzugt besteht die Metallschicht zu wenigstens 95 Massen-% aus Silber [Ag] oder aus Kupfer [Cu].

Insbesondere erstreckt sich der, von der Metallschicht überdeckte Bereich der Oberfläche des Membranträgers bis zu einem ersten Abstand von höchstens 5 mm [Millimeter] von der Schweißnaht.

Bevorzugt erstreckt sich die Metallschicht (zusätzlich) bis zu einem zweiten Abstand von höchstens 5 mm [Millimeter] ausgehend von der Schweißnaht über das Verbindungselement.

Insbesondere ist die Metallschicht ausgehend von dem Membranträger und hin zu dem Verbindungselement zumindest über die erste Verbindungszone hinweg und bevorzugt bis zu einer Mitte der Schweißnaht mit der Membranschicht beschichtet. Damit ist sichergestellt, dass das Membranträgerbauteil insgesamt gasdicht (im Bereich des Membranträgers zumindest gegenüber einem Gasgemisch, dabei aber durchlässig für Wasserstoff; im Bereich des Verbindungselements und der Schweißnaht vollständig gasdicht) ausgeführt ist.

Insbesondere ist
- zumindest teilweise zwischen der Metallschicht und der Schweißnaht,
- zumindest teilweise (bevorzugt vollständig) zwischen der Membranschicht und dem porösen Sintermetall des Membranträgers, und
- zumindest teilweise (bevorzugt vollständig) zwischen der Metallschicht und dem porösen Sintermetall des Membranträgers
eine Diffusionssperrschicht angeordnet.

Die Ausführungen zu dem Verfahren gelten gleichermaßen für das Membranträgerbauteil und umgekehrt.

Es wird zudem ein Reaktor zur Erzeugung von Wasserstoff vorgeschlagen, wobei der Reaktor zumindest ein wie vorstehend beschriebenes Membranträgerbauteil aufweist, wobei der Membranträger des Membranträgerbauteils über das Verbindungselement am Reaktor fixiert und gasdicht mit diesem verbunden ist. Weiterhin wird vorgeschlagen, das vorstehend beschriebene Membranträgerbauteil zur Abtrennung von Wasserstoff aus Gasgemischen zu verwenden.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll.

Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Membranträgerbauteil in einer seitlichen Ansicht im Schnitt gemäß Schritt d. des Verfahrens;
- Fig. 2:: ein Membranträgerbauteil in einer seitlichen Ansicht im Schnitt nach Schritt f. des Verfahrens;
- Fig. 3:: ein Membranträgerbauteil in einer seitlichen Ansicht im Schnitt nach Schritt f. des Verfahrens; zusätzlich mit einer Diffusionssperrschicht;
- Fig. 4:: ein Detail des Membranträgerbauteils nach Fig. 3 in einer seitlichen Ansicht im Schnitt; und
- Fig. 5:: einen Reaktor.

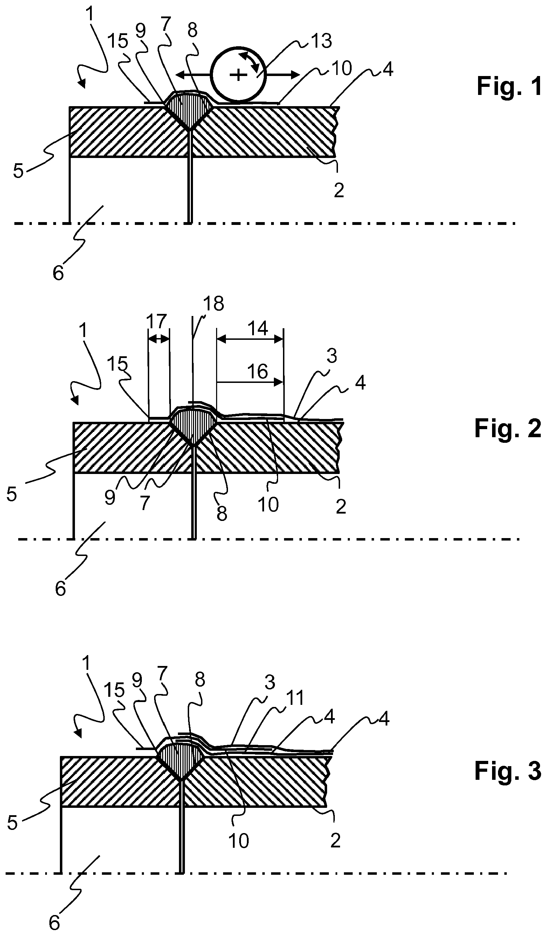

Fig. 1 zeigt ein Membranträgerbauteil 1 in einer seitlichen Ansicht im Schnitt gemäß Schritt d. des Verfahrens. Der Membranträger 2 und damit auch das Verbindungselement 5 sind rohrförmig ausgeführt. Das Membranträgerbauteil 1 weist einen Membranträger 2 aus einem porösen Sintermetall und ein metallisches Verbindungselement 5 zur Anbindung des Membranträgers 1 an eine gasführende Leitung 6 auf. Der Membranträger 1 und das Verbindungselement 5 sind über eine Schweißnaht 7 miteinander verbunden. Dabei wird eine erste Verbindungszone 8 zwischen Schweißnaht 7 und Membranträger 2 sowie eine zweite Verbindungszone 9 zwischen Schweißnaht 7 und Verbindungselement 5 gebildet. Die Schweißnaht 7 und ein an die Schweißnaht 7 angrenzender Bereich der Oberfläche 4 sind von einer Metallschicht 15 überdeckt. Die Metallschicht 15 wird durch die in Schritt d. applizierte Folie 10 gebildet.

Hier wird die metallische Folie 10 in Schritt d. mittels einer elastisch verformbaren Walze 13 an die Schweißnaht 7, die Oberfläche 4 und auch an das Verbindungselement 5 angedrückt.

Fig. 2 zeigt ein Membranträgerbauteil 1 in einer seitlichen Ansicht im Schnitt nach Schritt f. des Verfahrens. Der rohrförmige Membranträger 2 wird durch eine umlaufend ausgeführte Schweißnaht 7 mit dem rohrförmigen Verbindungselement 5 verbunden, so dass innerhalb des Membranträgerbauteils 1 ein Gasgemisch 21 zurückgehalten und über den Membranträger 2 und eine gasdichte Membranschicht 3 Wasserstoff 20 an eine Umgebung außerhalb des Membranträgerbauteils 1 abgeschieden werden kann. Nach Schritt f. des Verfahrens ist die Metallschicht 15 ausgehend von dem Membranträger 2 und hin zu dem Verbindungselement 5 über die erste Verbindungszone 8 hinweg und hier ungefähr bis zu einer Mitte 18 der Schweißnaht 7 mit der Membranschicht 3 beschichtet. Damit ist sichergestellt, dass das Membranträgerbauteil 1 insgesamt gasdicht (im Bereich des Membranträgers 2 zumindest gegenüber einem Gasgemisch 21, dabei aber durchlässig für Wasserstoff 20; im Bereich des Verbindungselements 5 und der Schweißnaht 7 vollständig gasdicht) ausgeführt ist.

Der von der Metallschicht 15 bzw. der Folie 10 überdeckte Bereich 14 der Oberfläche 4 des Membranträgers 2 erstreckt sich bis zu einem ersten Abstand 16 von der Schweißnaht 7. Die Metallschicht 15 erstreckt sich zusätzlich bis zu einem zweiten Abstand 17 ausgehend von der Schweißnaht 7 über das Verbindungselement 5.

Fig. 3 zeigt ein Membranträgerbauteil 1 in einer seitlichen Ansicht im Schnitt nach Schritt f. des Verfahrens; zusätzlich mit einer Diffusionssperrschicht 11. Der Membranträger 2 wurde vor Schritt d. zumindest teilweise mit einer Diffusionssperrschicht 11 beschichtet, die zumindest teilweise die Oberfläche 4 des Membranträgers 2 bildet. Die Diffusionssperrschicht 11 soll eine Degradation der Membranschicht 3 infolge von Diffusionswechselwirkungen mit dem Membranträger 2 verhindern oder zumindest einschränken. Die Diffusionssperrschicht 11 ist auch zwischen der Folie 10 und dem Membranträger 2 angeordnet, so dass die Folie 10 auf der, die Diffusionssperrschicht 11 aufweisende Oberfläche 4 des Membranträgers 2 aufliegt.

Die Diffusionssperrschicht 11 ist also zumindest teilweise zwischen der Metallschicht 15 und der Schweißnaht 7, zumindest teilweise zwischen der Membranschicht 3 und dem porösen Sintermetall des Membranträgers 2 und vollständig zwischen der Metallschicht 15 und dem porösen Sintermetall des Membranträgers 2 angeordnet.

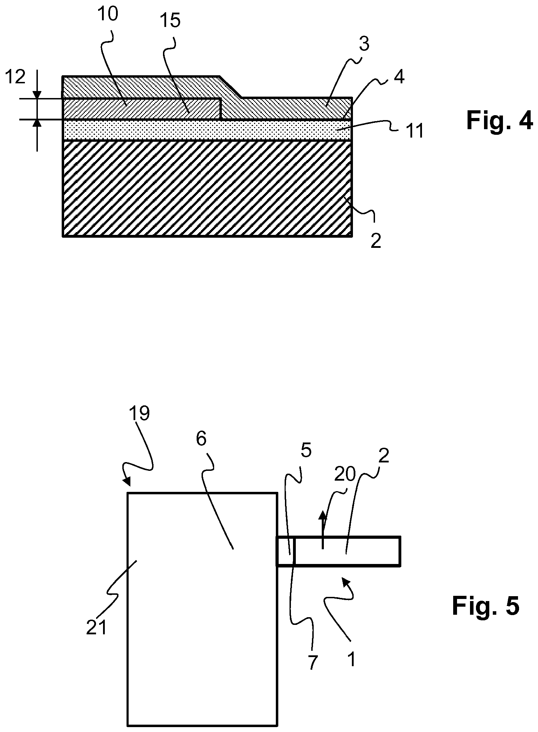

Fig. 4 zeigt ein Detail des Membranträgerbauteils 1 nach Fig. 3 in einer seitlichen Ansicht im Schnitt. Auf dem Membranträger 2 ist die Diffusionssperrschicht 11 angeordnet, die hier die Oberfläche 4 des Membranträgers 2 bildet. Auf der Diffusionssperrschicht ist die Folie 10 angeordnet, die eine Dicke 12 aufweist. Auf der Folie 10 und sich über die Folie 10 hinaus erstreckend, ist die Membranschicht 3 angeordnet. Die Membranschicht 3 ist von dem Membranträger 2 durch die Diffusionssperrschicht 11 vollständig getrennt angeordnet.

Fig. 5 zeigt einen Reaktor 19, der ein Membranträgerbauteil 1 aufweist, wobei der Membranträger 2 des Membranträgerbauteils 1 über das Verbindungselement 5 mit gasführenden Leitungen 6 im Reaktor 19 verbunden ist. Über das Verbindungselement 5 ist das Membranträgerbauteil 1 am Reaktor 19 fixiert und gasdicht mit diesem verbunden. Das Membranträgerbauteil 1 wird hier zur Abtrennung von Wasserstoff 20 aus Gasgemischen 21 verwendet.

### Bezugszeichenliste

- 1: Membranträgerbauteil
- 2: Membranträger
- 3: Membranschicht
- 4: Oberfläche
- 5: Verbindungselement
- 6: Leitung
- 7: Schweißnaht
- 8: erste Verbindungszone
- 9: zweite Verbindungszone
- 10: Folie
- 11: Diffusionssperrschicht
- 12: Dicke
- 13: Walze
- 14: Bereich
- 15: Metallschicht
- 16: erster Abstand
- 17: zweiter Abstand
- 18: Mitte
- 19: Reaktor
- 20: Wasserstoff
- 21: Gasgemisch

## Patentansprüche

1. Verfahren zur Herstellung eines Membranträgerbauteils (1) mit einem Membranträger (2) aus einem Sintermetall, der eine Membranschicht (3) aufweist, zumindest umfassend die folgenden Schritte:
a. Bereitstellen eines flächigen oder rohrförmigen Membranträgers (2) aus einem porösen Sintermetall mit einer Oberfläche (4), die zur Beschichtung mit der Membranschicht (3) vorgesehen ist;
b. Bereitstellen eines metallischen Verbindungselements (5) zur Anbindung des Membranträgers (2) an eine gasführende Leitung (6);
c. Verbinden von Membranträger (2) und Verbindungselement (5) mit einer Schweißnaht (7) zu dem Membranträgerbauteil (1) und Bilden einer ersten Verbindungszone (8) zwischen Schweißnaht (7) und Membranträger (2) sowie einer zweiten Verbindungszone (9) zwischen Schweißnaht (7) und Verbindungselement (5);
d. Anordnen einer Metallschicht (15) auf der Oberfläche (4) und der Schweißnaht (7), so dass die Metallschicht (15) zumindest die erste Verbindungszone (8) überdeckt;
e. stoffschlüssiges Verbinden der Metallschicht (15) zumindest mit der Oberfläche (4) und der Schweißnaht (7);
f. Beschichten zumindest von Teilbereichen der Oberfläche (4) und zumindest von Teilbereichen der Metallschicht (15) mit der Membranschicht (3).

2. Verfahren nach Patentanspruch 1, wobei der Membranträger (2) vor Schritt d. zumindest teilweise mit einer Diffusionssperrschicht (11) beschichtet wird, die zumindest teilweise die Oberfläche (4) des Membranträgers (2) bildet.

3. Verfahren nach einem der vorhergehenden Patentansprüche, wobei in Schritt d. eine Metallschicht (15) angeordnet wird, die zumindest einen der Werkstoffe Silber [Ag], Kupfer [Cu], Yttrium [Y], Cer [Ce], Gold [Au], Ruthenium [Ru], Indium [In] und Palladium [Pd] umfasst.

4. Verfahren nach Patentanspruch 3, wobei die Metallschicht (15) zu wenigstens 95 Massen-% aus Silber [Ag] oder aus Kupfer [Cu] besteht.

5. Verfahren nach einem der vorhergehenden Patentansprüche, wobei in Schritt d. eine Metallschicht (15) angeordnet wird, die eine Dicke (12) von höchstens 50 µm [Mikrometer] hat.

6. Verfahren nach einem der vorhergehenden Patentansprüche, wobei die Metallschicht (15) eine metallische Folie (10) ist, die in Schritt d. auf der Oberfläche (4) und der Schweißnaht (7) angeordnet wird.

7. Verfahren nach Patentanspruch 6, wobei die metallische Folie (10) vor Schritt d) einen weichgeglühten Zustand hat.

8. Verfahren nach einem der vorhergehenden Patentansprüche 6 und 7, wobei die metallische Folie (10) in Schritt d. mittels mindestens einer elastisch verformbaren Walze (13) zumindest an die Schweißnaht (7) und die Oberfläche (4) angedrückt wird.

9. Verfahren nach einem der vorhergehenden Patentansprüche 6 bis 8, wobei die metallische Folie (10) mittels Rollnahtschweißen zumindest mit der Oberfläche (4) stoffschlüssig verbunden wird.

10. Verfahren nach einem der vorhergehenden Patentansprüche, wobei die Metallschicht (15) in Schritt e. mittels Sintern stoffschlüssig zumindest mit der Oberfläche (4) und der Schweißnaht (7) verbunden wird.

11. Membranträgerbauteil (1) zumindest aufweisend einen Membranträger (2) aus einem porösen Sintermetall und ein metallisches Verbindungselement (5) zur Anbindung des Membranträgers (2) an eine gasführende Leitung (6), wobei der Membranträger (2) und das Verbindungselement (5) über eine Schweißnaht (7) miteinander verbunden sind, wobei der Membranträger (2) eine Oberfläche (4) aufweist, die mit einer Membranschicht (3) beschichtet ist, wobei die Schweißnaht (7) zumindest teilweise und ein an die Schweißnaht (7) angrenzender Bereich (14) der Oberfläche (4) von einer Metallschicht (15) überdeckt sind, wobei die Membranschicht (3) zumindest teilweise auf der Metallschicht (15) angeordnet ist; wobei die Metallschicht (15) nach der Verbindung von Membranträger (2) und Verbindungselement (5) durch die Schweißnaht (7) auf der Oberfläche (4) und der Schweißnaht (7) angeordnet ist.

12. Membranträgerbauteil (1) nach Patentanspruch 11, wobei die Metallschicht (15) zumindest einen der Werkstoffe Silber [Ag], Kupfer [Cu], Yttrium [Y], Cer [Ce], Gold [Au], Ruthenium [Ru], Indium [In] und Palladium [Pd] umfasst.

13. Membranträgerbauteil (1) nach Patentanspruch 12, wobei die Metallschicht (15) zu wenigstens 95 Massen-% aus Silber [Ag] oder aus Kupfer [Cu] besteht.

14. Membranträgerbauteil (1) nach einem der Patentansprüche 11 bis 13, wobei sich der, von der Metallschicht (15) überdeckte Bereich (14) der Oberfläche (4) des Membranträgers (2) bis zu einem ersten Abstand (16) von höchstens 5 mm [Millimeter] von der Schweißnaht (7) erstreckt.

15. Membranträgerbauteil (1) nach einem der Patentansprüche 11 bis 14, wobei sich die Metallschicht (15) bis zu einem zweiten Abstand (17) von höchstens 5 mm [Millimeter] von der Schweißnaht (7) über das Verbindungselement (5) erstreckt.

16. Membranträgerbauteil (1) nach einem der Patentansprüche 11 bis 14, wobei die Metallschicht (15) ausgehend von dem Membranträger (2) und hin zu dem Verbindungselement (5) zumindest bis zu einer Mitte (18) der Schweißnaht (7) mit der Membranschicht (3) beschichtet ist.

17. Membranträgerbauteil (1) nach einem der Patentansprüche 11 bis 14, wobei
- zumindest teilweise zwischen der Metallschicht (15) und der Schweißnaht (7),
- zumindest teilweise zwischen der Membranschicht (3) und dem porösen Sintermetall des Membranträgers (2), und
- zumindest teilweise zwischen der Metallschicht (15) und dem porösen Sintermetall des Membranträgers (2)
eine Diffusionssperrschicht (11) angeordnet ist.

18. Reaktor (19) zur Erzeugung von Wasserstoff (20), zumindest aufweisend ein Membranträgerbauteil (1) nach einem der Patentansprüche 11 bis 17, wobei der Membranträger (2) des Membranträgerbauteils (1) über das Verbindungselement (5) am Reaktor (19) fixiert und gasdicht mit diesem verbunden ist.

19. Verwendung eines Membranträgerbauteils (1) nach einem der Patentansprüche 11 bis 17 zur Abtrennung von Wasserstoff (20) aus Gasgemischen (21).

## Claims

1. Method for manufacturing a diaphragm support member (1) with a diaphragm support (2) made of a sintered metal having a diaphragm layer (3), comprising at least the following steps:
a. Providing a laminar or tubular diaphragm support (2) made of a porous sintered metal with a surface (4) that is provided for the purpose of being coated with the diaphragm layer (3);
b. providing a metallic connecting element (5) for connecting the diaphragm support (2) to a gas-carrying line (6);
c. connecting the diaphragm support (2) and connecting element (5) with a weld seam (7) to the diaphragm support member (1) and forming a first connection zone (8) between the weld seam (7) and diaphragm support (2) and a second connection zone (9) between the weld seam (7) and the connecting element (5);
d. arranging a metal layer (15) on the surface (4) and the weld seam (7) so that the metal layer (15) covers at least the first connection zone (8);
e. cohesively joining the metal layer (15) at least with the surface (4) and the weld seam (7); and
f. coating at least portions of the surface (4) and at least portions of the metal layer (15) with the diaphragm layer (3).

2. Method as set forth in claim 1, wherein the diaphragm support (2) is coated before step d. at least partially with a diffusion barrier layer (11) that at least partially forms the surface (4) of the diaphragm support (2).

3. Method as set forth in any one of the preceding claims, wherein a metal layer (15) comprising at least one of the materials silver [Ag], copper [Cu], yttrium [Y], cerium [Ce], gold [Au], ruthenium [Ru], indium [In], and palladium [Pd] is applied in step d..

4. Method as set forth in claim 3, wherein the metal layer consists of at least 95% by mass of silver [Ag] or of copper [Cu].

5. Method as set forth in any one of the preceding claims, wherein a metal layer (15) having a thickness (12) of no more than 50 µm [micrometers] is deposited in step d..

6. Method as set forth in any one of the preceding claims, wherein the metal layer (15) is a metallic foil (10) that is arranged on the surface (4) and the weld seam (7) in step d..

7. Method as set forth in claim 6, wherein the metallic foil (10) is in a soft-annealed state before step d..

8. Method as set forth in any one of preceding claims 6 and 7, wherein the metallic foil (10) is pressed in step d. by at least one elastically deformable roller (13) at least against the weld seam (7) and the surface (4).

9. Method as set forth in any one of preceding claims 6 to 8, wherein the metallic foil (10) is joined cohesively at least with the surface (4) by means of seam welding.

10. Method as set forth in any one of the preceding claims, wherein the metal layer (15) is joined cohesively at least with the surface (4) and the weld seam (7) by means of sintering in step e..

11. Diaphragm support member (1), at least comprising a diaphragm support (2) made of a porous sintered metal and a metallic connecting element (5) for connecting the diaphragm support (2) to a gas-carrying line (6), wherein the diaphragm support (2) and the connecting element (5) are connected to one another by means of a weld seam (7), wherein the diaphragm support (2) has a surface (4) that is coated with a diaphragm layer (3), wherein the weld seam (7) is at least partially covered by a metal layer (15) and a region (14) adjacent to the weld seam (7) of the surface (4) is covered by a metal layer (15), and wherein the diaphragm layer (3) is at least partially disposed on the metal layer (15); wherein the metal layer (15), after connecting diaphragm support (2) and connecting element (5) with the weld seam (7), is arranged on the surface (4) and the weld seam (7) .

12. Diaphragm support member (1) as set forth in claim 11, wherein the metal layer (15) comprises at least one of the materials silver [Ag], copper [Cu], yttrium [Y], cerium [Ce], gold [Au], ruthenium [Ru], indium [In], and palladium [Pd].

13. Diaphragm support member (1) as set forth in claim 12, wherein the metal layer (15) consists of at least 95% by mass of silver [Ag] or of copper [Cu].

14. Diaphragm support member (1) as set forth in any one of claims 11 to 13, wherein the region (14) of the surface (4) of the diaphragm support (2) that is covered by the metal layer (15) extends up to a first distance (16) of no more than 5 mm [millimeters] from the weld seam (7).

15. Diaphragm support member (1) as set forth in any one of claims 11 to 14, wherein the metal layer (15) extends up to a second distance (17) of no more than 5 mm [millimeters] from the weld seam (7) via the connecting element (5).

16. Diaphragm support member (1) as set forth in any one of claims 11 to 14, wherein the metal layer (15), starting from the diaphragm support (2) and toward the connecting element (5), is coated with the diaphragm layer (5) at least up to a middle of the weld seam (7).

17. Diaphragm support member (1) as set forth in any one of claims 11 to 14, wherein a diffusion barrier layer (11) is arranged
- at least partially between the metal layer and the weld seam (7),
- at least partially between the diaphragm layer (3) and the porous sintered metal of the diaphragm support (2), and
- at least partially between the metal layer (15) and the porous sintered metal of the diaphragm support (2).

18. Reactor (19) for generating hydrogen (20), at least comprising a diaphragm support member (1) according to one of the claims 11 to 17, wherein the diaphragm support (2) of the diaphragm support member (1) being fixed to the reactor (19) via the connecting element (5) and connected thereto in a gas-tight manner.

19. Use of a diaphragm support member (1) as set forth in any one of claims 11 to 17 for the separation of hydrogen (20) from gas mixtures (21).

## Revendications

1. Procédé de fabrication d'un composant à support de membrane (1) muni d'un support de membrane (2) en métal fritté qui comporte une couche de membrane (3), ledit procédé comprenant au moins les étapes suivantes :
a. fournir un support de membrane (2), tubulaire ou sensiblement bidimensionnel, qui est réalisé à partir d'un métal fritté poreux et qui est pourvu d'une surface (4) destinée à être revêtue de la couche de membrane (3) ;
b. fournir un élément de liaison métallique (5) destiné à relier le support de membrane (2) à une conduite de transport de gaz (6) ;
c. relier le support de membrane (2) et l'élément de liaison (5) à l'aide d'un cordon de soudure (7) pour former le composant à support de membrane (1) et former une première zone de liaison (8) entre le cordon de soudure (7) et le support de membrane (2) ainsi qu'une deuxième zone de liaison (9) entre le cordon de soudure (7) et l'élément de liaison (5) ;
d. disposer une couche de métal (15) sur la surface (4) et le cordon de soudure (7) de sorte que la couche de métal (15) recouvre au moins la première zone de liaison (8) ;
e. relier par une liaison de matière la couche de métal (15) au moins à la surface (4) et au cordon de soudure (7) ;
f. revêtir au moins des zones partielles de la surface (4) et au moins des zones partielles de la couche de métal (15) avec la couche de membrane (3).

2. Procédé selon la revendication 1, avant l'étape d. le support de membrane (2) étant au moins partiellement revêtu d'une couche anti-diffusion (11) qui forme au moins partiellement la surface (4) du support de membrane (2).

3. Procédé selon l'une des revendications précédentes, une couche de métal (15) étant disposée à l'étape d., laquelle contient au moins un des matériaux argent [Ag], cuivre [Cu], yttrium [Y], cérium [Ce], or [Au], ruthénium [Ru], indium [In] et palladium [Pd].

4. Procédé selon la revendication 3, la couche de métal (15) comprenant au moins 95 % en masse d'argent [Ag] ou de cuivre [Cu].

5. Procédé selon l'une des revendications précédentes, une couche de métal (15) étant disposée à l'étape d., laquelle a une épaisseur (12) de 50 µm [micromètres] maximum.

6. Procédé selon l'une des revendications précédentes, la couche de métal (15) étant une feuille métallique (10) qui est disposée à l'étape d. sur la surface (4) et le cordon de soudure (7).

7. Procédé selon la revendication 6, la feuille métallique (10) étant dans un état recuit doux avant l'étape d).

8. Procédé selon l'une des revendications précédentes 6 et 7, la feuille métallique (10) étant pressée à l'étape d. au moins sur le cordon de soudure (7) et la surface (4) au moyen d'au moins un rouleau élastiquement déformable (13).

9. Procédé selon l'une des revendications précédentes 6 à 8, la feuille métallique (10) étant reliée par une liaison de matière au moins à la surface (4) par soudage à la molette.

10. Procédé selon l'une des revendications précédentes, la couche de métal (15) étant reliée à l'étape e. par une liaison de matière au moins à la surface (4) et au cordon de soudure (7) par frittage.

11. Composant à support de membrane (1) comportant au moins un support de membrane (2) en un métal fritté poreux et un élément de liaison métallique (5) destiné à relier le support de membrane (2) à une conduite de transport de gaz (6), le support de membrane (2) et l'élément de liaison (5) étant reliés l'un à l'autre par un cordon de soudure (7), le support de membrane (2) comportant une surface (4) qui est revêtue d'une couche de membrane (3), le cordon de soudure (7) étant au moins partiellement revêtu d'une couche de métal (15) et une zone (14), adjacente au cordon de soudure (7), de la surface (4) étant recouverte d'une couche de métal (15), la couche de membrane (3) étant disposée au moins partiellement sur la couche de métal (15) ; la couche de métal (15) étant disposée sur la surface (4) et le cordon de soudure (7) après que le support de membrane (2) et l'élément de liaison (5) ont été reliés par le cordon de soudure (7).

12. Composant à support de membrane (1) selon la revendication 11, la couche de métal (15) comprenant au moins un des matériaux argent [Ag], cuivre [Cu], yttrium [Y], cérium [Ce], or [Au], ruthénium [Ru], indium [In] et palladium [Pd].

13. Composant à support de membrane (1) selon la revendication 12, la couche de métal (15) comprenant au moins 95 % en masse d'argent [Ag] ou de cuivre [Cu].

14. Composant à support de membrane (1) selon l'une des revendications 11 à 13, la zone (14), recouverte par la couche de métal (15), de la surface (4) du support de membrane (2) s'étendant jusqu'à une première distance (16) de 5 mm [millimètres] maximum du cordon de soudure (7).

15. Composant à support de membrane (1) selon l'une des revendications 11 à 14, la couche de métal (15) s'étendant jusqu'à une deuxième distance (17) de 5 mm maximum du cordon de soudure (7) sur l'élément de liaison (5).

16. Composant à support de membrane (1) selon l'une des revendications 11 à 14, la couche de métal (15) étant revêtue avec la couche de membrane (3) depuis le support de membrane (2) et en direction de l'élément de liaison (5) au moins jusqu'à un milieu (18) du cordon de soudure (7).

17. Composant à support de membrane (1) selon l'une des revendications 11 à 14, une couche anti-diffusion (11) étant disposée
- au moins partiellement entre la couche de métal (15) et le cordon de soudure (7),
- au moins partiellement entre la couche de membrane (3) et le métal fritté poreux du support de membrane (2), et
- au moins partiellement entre la couche de métal (15) et le métal fritté poreux du support de membrane (2).

18. Réacteur (19) destiné à générer de l'hydrogène (20), ledit réacteur comportant au moins un composant à support de membrane (1) selon l'une des revendications 11 à 17, le support de membrane (2) du composant à support de membrane (1) étant fixé au réacteur (19) au moyen de l'élément de liaison (5), et relié à celui-ci de manière étanche aux gaz.

19. Utilisation d'un composant à support de membrane (1) selon l'une des revendications 11 à 17 pour séparer l'hydrogène (20) de mélanges gazeux (21).
